Europäisches Patentamt

European Patent Office

Office européen des brevets

(19)

(11) Publication number: **0 036 321**
**B1**

(12) EUROPEAN PATENT SPECIFICATION

(45) Date of publication of patent specification: **27.06.84**

(51) Int. Cl.³: **B 01 D 46/10, B 01 D 29/20**

(21) Application number: **81301091.5**

(22) Date of filing: **16.03.81**

(54) Ceramic filter.

(30) Priority: **15.03.80 JP 33202/80**

(43) Date of publication of application:
**23.09.81 Bulletin 81/38**

(45) Publication of the grant of the patent:
**27.06.84 Bulletin 84/26**

(84) Designated Contracting States:
**BE DE FR GB IT SE**

(56) References cited:
**DE - A - 2 248 359**
**DE - A - 2 900 705**
**DE - B - 1 097 344**
**FR - A - 1 515 158**
**US - A - 994 282**
**US - A - 3 458 977**
**US - A - 4 178 145**

(73) Proprietor: **NGK INSULATORS, LTD.**
**2-56, Suda-cho, Mizuho-ku**
**Nagoya-shi, Aichi 467 (JP)**

(72) Inventor: **Mochida, Shigeru**
**No. 1855-19 (86th Block 19) Shirayama-Cho**
**Kasugai City (JP)**
Inventor: **Ogasawara, Takayuki**
**No. 1(43-305), 3-Chome Fujigaoka**
**Konan City (JP)**

(74) Representative: **Whalley, Kevin et al,**
**Marks & Clerk 57/60 Lincoln's Inn Fields**
**London WC2A 3LS (GB)**

Courier Press, Leamington Spa, England.

## Description

The present invention relates to a ceramic filter for removing fine particles contained in gases, and more particularly to a ceramic honeycomb filter which has excellent heat resistance and thermal shock resistance, is small in size and has a very large filter area.

Known filters include ones wherein various fillers, such as adsorbing material, steel wools, ceramic fibres, and porous porcelains, are arranged. However, in filters aiming at removing fine particles, unless filters having fine meshes are used, the removing efficiency cannot be improved but on the contrary a disadvantageous increase of the pressure drop results when a high filtration rate is required.

As means for enlarging the filter area in the prior sheet-formed, plate-formed or cylindrical filters, there are used relatively simple structures, such as corrugated structures and double cylindrical forms. However, a notable increase of the filter area per unit volume has not been attained. Therefore, in order to avoid a high pressure drop, the filter volume has been made larger and it has been very difficult to obtain a filter of smaller size.

Various processes for producing ceramic honeycomb structural bodies are known and include, for example, a paper dipping process wherein an organic porous sheet is impregnated with a ceramic slurry and a honeycomb body is formed and the formed body is fired, a pipe binding process wherein a large number of pipes of given shape are bound, an extrusion process wherein a raw batch material is extruded through a die provided with a large number of given shaped slits, and a press process.

The method for producing a ceramic honeycomb structural body will now be explained in more detail with respect to an extrusion process. To fine powder of a ceramic raw material, such as alumina, silica, mullite, silicon carbide, silicon nitride and/or cordierite, are added an organic binder and a plasticizer, the mixture is kneaded to prepare a composition consisting mainly of ceramic raw material, this composition is extruded through a die provided with a large number of slits, which forms a monolithic structure having channels of given shape in cross-section, for example polygonal such as triangular, tetragonal or hexagonal, circular or oval, and the shaped structure is dried and fired to obtain a porous ceramic honeycomb body.

Honeycomb structural bodies have been recently used as catalyst supports for purifying exhaust gases of automobiles, and as heat exchangers for gas turbines. As mentioned above, a large number of parallel channels of given shape extending therethrough are uniformly distributed, so that the pressure drop of the gas flow is very small and the surface area per unit volume is large and the channels are constructed of thin walls, so that such a body can be easily heated up. However, in such ceramic honeycomb bodies, the large number of channels defined by the thin partition walls have been limited to the function of passages for flowing gas.

The present invention provides a ceramic filter comprising a honeycomb structural body having parallel longitudinally extending channels defined by gas permeable porous ceramic walls, wherein the number of channels in the honeycomb body is 3.9—93/cm² (25—600/inch²) and wherein the walls forming the channels are of a substantially constant thickness of 0.10 to 1.0 mm, and wherein one end face of some channels of the honeycomb body is sealed with a sealing material which is the same as the ceramic material forming the honeycomb body and the other end face of the remaining channels is also sealed with the same sealing material.

In a honeycomb filter body according to the invention, the thickness thereof can be far thinner than that of a conventional ceramic filter and the available area of the filter can be structural enlarged, and even if a filter material having a fine structure is used in order to remove fine particles, the pressure drop is not increased and a compact structure can be obtained.

The invention will be further described, by way of example only, with reference to the accompanying drawings wherein:

Figure 1 is an end view of a previously known honeycomb structural body;

Figure 2 is a partially cut away side view of the honeycomb structural body shown in Figure 1;

Figure 3 is an end view of one embodiment of a honeycomb structural body comprising a filter according to the present invention;

Figure 4 is an end view of another embodiment of a honeycomb structural body comprising a filter according to the present invention;

Figure 5 is a partially cut away side view of the honeycomb structural body shown in Figure 4;

Figure 6 is an enlarged fragmentary view of a part of the honeycomb structural body of Figure 5; and

Figures 7—11 are end views of other embodiments of honeycomb structural bodies comprising filters according to the present invention.

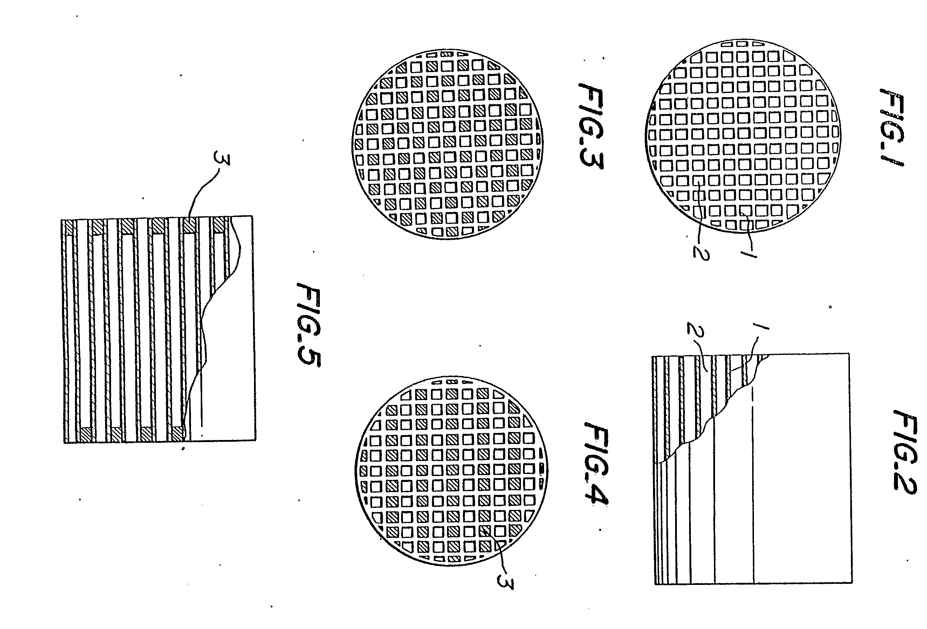

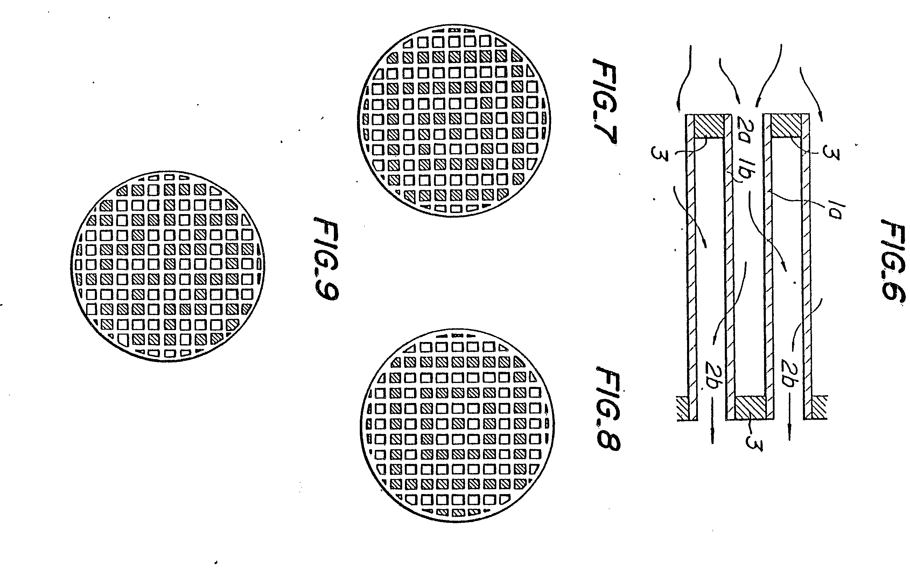

Figures 1 and 2 show a conventional honeycomb structural body in which the cross-sectional shape of a large number of parallel channels 2 extending therethrough is tetragonal and each channel is defined by very thin partition walls 1.

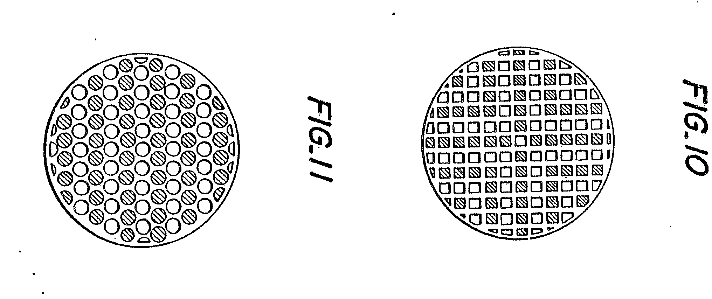

Figure 3 shows one embodiment of a honeycomb structural body wherein one end surface of the channels of the honeycomb body is sealed in a checker pattern, and Figures 4 and 5 show an embodiment of a honeycomb structural body wherein one end surface of the channels is sealed in alternate rows. Thus, the thin porous partition walls forming the channels are used as a filter by sealing one end of the channels in the honeycomb structural body. When sealing the channels, a suitable mask is used and the sealing material is the same ceramic material as that forming the ceramic honeycomb body, in order to achieve good heat resistance and thermal shock resistance. The pattern of sealing the channels is not limited to the checker pattern shown in Figure 3 and the alternate row pattern shown in Figure 4; other sealing patterns include a spiral pattern (Figure 7), a concentric tetragonal pattern (Figure 8), a stepped pattern (Figure 9) and a cross pattern (Figure 10). The shape of the channels may be other than tetragonal, for example another polygonal shape such as triangular or hexagonal, or circular or oval. Circular channels are shown in Figure 11.

The ceramic honeycomb body has a wall thickness of 0.10—1.0 mm, preferably 0.15—0.80 mm, a channel number of 3.9—93/cm$^2$ (25—600/inch$^2$), preferably 7.8—46.5/cm$^2$ (50—300/inch$^2$), and a porosity of 30—60%. The filter preferably has a diameter of 50—300 mm and a length of 50—400 mm and the shape of the filter may be other than a circular column, for example an oval column or a polygonal column. The filter size in the radial direction may be optionally enarged by bonding several filters.

A further explanation will now be made with respect to the effect of the filter according to the present invention. Figure 6 is an enlarged fragmentary view of a part of the honeycomb structural body shown in Figure 5. This filter is set so that the direction of the channels is parallel to the flow of dust-containing gas and the gas flow passes into the filter through an opening portion 2a of a gas inlet end face and passes through thin porous ceramic partition walls 1a and 1b having communicating pores, because the other end face of the respective channel is sealed with sealing material 3, and the gas flow transfers to the adjacent channels which open at the gas outlet side and is discharged. Thus, the thin porous partition walls having communicating pores function as a filter and the entrained fine particles in the gas are filtered.

Since the filter has a honeycomb structure the available area of the filter per unit volume is noticeably increased, and since the thickness of the partition walls is very thin the pressure drop is relatively low even when a high filtration rate is required, and the structure can be compact. By controlling the pore distribution and porosity of the porous material, fine particles of various sizes can be filtered. Furthermore, the structure may be composed of a porous ceramic material having excellent heat resistance and thermal shock resistance, so that the filter can be used at high temperatures and is very stable to sudden temperature variation. Therefore, the filter clogged with fine particles can be exposed to a fairly high temperature, so that the fine particles can be removed by burning, whereby the filter function can be recovered. Accordingly, the filter is very effective for removing fine carbon dust from exhaust gases of Diesel engines and other internal combustion engines at high temperatures.

If possible, the filter may be coated with a catalyst and the clogged fine particles burnt at a low temperature to recover the filter function.

The invention will now be further described with reference to the following illustrative Examples.

### Example 1

By using a cordierite honeycomb having a diameter of 120 mm, a length of 120 mm, a thicknes of the partition walls of the channels of 0.30 mm and a number of channels per square inch of about 200 (31.0/cm$^2$), a honeycomb filter wherein both ends are sealed in checker pattern as shown in Figure 3 was prepared. The material for sealing the channels was the same as that forming the honeycomb structural body, and after moulding the honeycomb body the channels were sealed and then fired.

The obtained cordierite honeycomb had a porosity of 43% and an average pore diameter of 10 $\mu$m. The pressure drop of this sample was measured by using air at room temperature, and the pressure drop was 50 mm H$_2$O (490 Pa) at a flow rate of 2 m$^3$/min. The filter area was about 12,700 cm$^2$.

For comparison, a cylindrical ceramic filter having the same diameter and length as the above described honeycomb structural body, one end of the cylinder being sealed, was prepared and the pressure drop of this filter was measured. The wall thickness of the ceramic filter was 3 mm, which is thin as production permits. The material forming the filter was cordierite, the porosity was 45%, the average pore diameter was 20 $\mu$m and the filter area was about 770 cm$^2$. The pressure loss measured by using air at room temperature was 1,800 mm H$_2$O (17646 Pa) at a flow rate of 2 m$^3$/min, i.e. the pressure drop was about 35 times as high as the previously described honeycomb filter, and the filter area was far smaller than the previously described honeycomb filter.

### Example 2

By using a mullite honeycomb having a diameter of 140 mm, a length of 150 mm, a thickness of the partition walls of the channels of 0.30 mm and a number of channels per square inch of about 200 (31.0/cm$^2$), a honeycomb filter wherein both ends are sealed as shown in Figure 4 was prepared. The material for sealing the channels was the same as that forming the honeycomb structural body, and after moulding and firing the honeycomb body the channels were sealed and again fired.

The obtained mullite honeycomb had a porosity of 41% and an average pore diameter of 14

$\mu$m. The pressure drop of the sample was measured by using air at room temperature, and the pressure drop was 40 mm $H_2O$ (392 Pa) at a flow rate of 2 m³/min. The filter area was about 11,000 cm².

### Example 3

A honeycomb filter was prepared by sealing channels of a honeycomb having a diameter of 120 mm, a length of 150 mm, a thickness of the partition walls of the channels of 0.43 mm and a number of channels per square inch of about 100 (15. 5/cm²), with the same material as that forming the honeycomb structural body in a checker pattern as shown in Figure 3. The pressure drop of the filter was found to be 80 mm $H_2O$ (784 Pa) by using air at room temperature at a flow rate of 2 m³/min.

When exhaust gas of a Diesel engine was passed through this filter to collect 7 g of fine carbon particles, the pressure drop measured by using air at room temperature was 800 mm $H_2O$ (7840 Pa) at a flow rate of 2 m³/min. It has been generally known that fine carbon particles in the exhaust gas of a Diesel engine are burnt at a temperature of 550—650°C, but for the purpose of determining the heat resistance of the filter wherein carbon has collected the filter was put in an electric furnace and treated at 1,200°C for 30 minutes.

As a result, the filter was not at all damaged and the fine carbon particles were burnt, and the pressure drop measured by using air at room temperature was 80 mm $H_2O$ (784 Pa) at a flow rate of 2 m³/min whereby it was confirmed that the filter function has been recovered.

### Claims

1. A ceramic filter comprising a honeycomb structural body having parallel longitudinally extending channels (2) defined by gas permeable porous ceramic walls (1), wherein the number of channels in the honeycomb body is 3.9—93/cm² (25—600/inch²) and wherein the walls forming the channels are of a substantially constant-thickness of 0.10 to 1.0 mm, characterized in that one end face of some channels of the honeycomb body is sealed with a sealing material (3) which is the same as the ceramic material forming the honeycomb body and the other end face of the remaining channels is also sealed with the said sealing material.

2. A ceramic filter as claimed in Claim 1, characterized in that the said number of channels is 7.8—46.5/cm² (50—300/inch²).

3. A ceramic filter as claimed in Claim 1 or 2, characterized in that the said wall thickness is 0.15—0.80 mm.

4. A ceramic filter as claimed in any of Claims 1 to 3, characterized in that the sealed channels and the non-sealed channels are arranged in a checker pattern when viewed from one end surface of the honeycomb body.

### Revendications

1. Filtre céramique comprenant un corps structural en nid d'abeilles ayant des canaux longitudinaux parallèles (2) définis par des parois (1) en matière céramique poreuse perméables aux gaz, dans lequel le nombre de canaux dans le corps en nid d'abeilles est de 3,9 à 93/cm² (25 à 600/pouce carré) et dans lequel les parois formant les canaux sont d'une épaisseur sensiblement constante de 0,10 à 1,0 mm, caractérisé en ce qu'une face d'extrémité de certains canaux du corps en nid d'abeilles est hermétiquement fermée par une matière obturante (3) qui est la même que la matière céramique formant le corps en nid d'abeilles et l'autre face d'extrémité des canaux restants est également hermétiquement fermée par la même matière obturante.

2. Filtre céramique selon la revendication 1, caractérisé en ce que ledit nombre de canaux est de 7,8 à 46,5/cm² (50 à 300/pouce carré).

3. Filtre céramique selon la revendication 1 ou 2, caractérisé en ce que ladite épaisseur de paroi est de 0,15 à 0.80 mm.

4. Filtre céramique selon l'une quelconque des revendications 1 à 3, caractérisé en ce que les canaux obturés et les canaux non-obturés sont disposés selon un motif en damier quand on les observe depuis une surface d'extrémité du corps en nid d'abeilles.

### Patentansprüche

1. Keramisches Filter, umfassend eine Honigwaben-Strukturkörper, mit parallelen, längs verlaufenden Kanälen (2), welche von gasdurchlässigen porösen Keramikwänden (1) begrenzt sind, wobei die Anzahl der Kanäle im Honigwabenkörper 3,9 bis 93/cm² (25 bis 600/inch²) beträgt und wobei die die Kanäle bildenden Wände im wesentlichen eine konstante Dicke von 0,10 bis 1,0 mm haben, dadurch gekennzeichnet, dass ein Endfläche einiger Kanäle des Honigwabenkörpers mit einem Abdichtmaterial (3) abgedichtet ist, welches dasselbe ist, wie das den Honigwabenkörper bildende keramische Material, und dass die andere Endfläche der restlichen Kanäle ebenso mit demselben Abdichtmaterial abgedichtet ist.

2. Keramisches Filter nach Anspruch 1, dadurch gekennzeichnet, dass die Anzahl der Kanäle 7,8 bis 46,5/cm² (50 bis 300/inch²) beträgt.

3. Keramisches Filter nach Anspruch 1 oder 2, dadurch gekennzeichnet, dass die genannte Wanddicke 0,15 bis 0,80 mm beträgt.

4. Keramisches Filter nach einem der Ansprüche 1 bis 3, dadurch gekennzeichnet, dass die abgedichteten Kanäle und die nicht-abgedichteten Kanäle in einem karierten Muster angeordnet sind, wenn diese von einer Endfläche des Honigwabenkörpers betrachtet werden.

FIG_1

FIG.2

FIG.3

FIG_4

FIG_5

## FIG_6

## FIG_7

## FIG_8

## FIG_9

0 036 321

FIG. 10

FIG. 11

3